(19) Europäisches Patentamt / European Patent Office / Office européen des brevets

(11) **EP 2 223 474 B1**

(12) **FASCICULE DE BREVET EUROPEEN**

(45) Date de publication et mention de la délivrance du brevet:
**11.10.2017 Bulletin 2017/41**

(21) Numéro de dépôt: **08852158.8**

(22) Date de dépôt: **24.11.2008**

(51) Int Cl.:
**H04L 12/911** *(2013.01)*    **H04L 12/913** *(2013.01)*
**H04W 28/26** *(2009.01)*    **H04W 72/08** *(2009.01)*
**H04W 84/18** *(2009.01)*

(86) Numéro de dépôt international:
**PCT/EP2008/066083**

(87) Numéro de publication internationale:
**WO 2009/065958 (28.05.2009 Gazette 2009/22)**

(54) **PROCEDE DE RESERVATION AVEC GARANTIE DE LATENCE ET DE DEBIT DANS UN RESEAU A ALLOCATION DYNAMIQUE DE CRENEAUX TEMPORELS**

VERFAHREN ZUR RESERVIERUNG MIT LATENZGARANTIE UND EINER BITRATE IN EINEM DYNAMISCHEN ZUTEILUNGSNETZWERK VON ZEITSCHLITZEN

METHOD OF RESERVATION WITH GUARANTEE OF LATENCY AND OF BIT RATE IN A TIME SLOT DYNAMIC ALLOCATION NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.11.2007 FR 0708221**

(43) Date de publication de la demande:
**01.09.2010 Bulletin 2010/35**

(73) Titulaire: **THALES**
**92400 Courbevoie (FR)**

(72) Inventeur: **HEURGUIER, Dominique**
**F-94170 Le Perreux-sur-Marne (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2007/048349    US-A1- 2003 202 476**

- **CANALES M ET AL: "Interference-aware routing with bandwidth requirements in mobile ad hoc networks" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 4, 25 septembre 2005 (2005-09-25), pages 2556-2560, XP010878915 ISBN: 978-0-7803-9152-9**
- **WU ET AL: "QoS multicast routing by using multiple paths/trees in wireless ad hoc networks" AD HOC NETWORKS, ELSEVIER, vol. 5, no. 5, 23 mars 2007 (2007-03-23), pages 600-612, XP005934474 ISSN: 1570-8705**

**Description**

L'invention concerne les réseaux radio ad hoc à accès temporel multiple ou TDMA (Time Division Multiple Access). Elle vise plus particulièrement la capacité de réservation de ressources incluant les contraintes de débit et de latence bout en bout, l'une ou l'autre de ces contraintes pouvant être prépondérante. Un réseau ad hoc est défini comme un réseau dans lequel les noeuds le constituant sont mobiles, c'est-à-dire que le nombre de noeuds dans le réseau est susceptible d'évoluer dans le temps.

Elle s'applique aussi dans des systèmes multi-canaux à accès temporel et fréquentiel multiple ou « TFDMA » acronyme anglo-saxon pour « Time and Frequency Division Multiple Access », les réseaux radio utilisant une modulation orthogonale en fréquence OFDMA (Orthogonal Frequency Division Multiple Access) et dans tout autre système, qui utilise un schéma d'allocation dynamique à la place d'un schéma d'allocation fixe.

Pour mémoire, dans la description, les messages et objets suivants du protocole RSVP sont utilisés :

- L'objet Tspec du message PATH, décrit le profil de trafic de l'application,
- L'objet Adspec décrit, entre autres, les caractéristiques du chemin et en particulier la largeur de bande maximum disponible sur le chemin,
- L'objet Rspec du message RESV de réservation contient la largeur de bande à réserver pour le flux de données.

L'émetteur envoie un message PATH à un destinataire vers lequel doivent être transmises des données, le destinataire ou récepteur répond en émettant un message de réservation RESV contenant la largeur de bande à réserver pour les routeurs par lesquels sont relayés les messages ou paquets de données.

Les réseaux radio TDMA utilisent généralement des allocations statiques. L'allocation est, soit totalement fixée (trame cyclique avec un slot par noeud), soit définie à l'avance pour une configuration donnée.

Les nouveaux systèmes radio commencent à prendre en compte la qualité de service, mais ils ne permettent pas encore de supporter la réservation globale de ressources avec garantie de service de bout en bout en débit et latence. Par exemple, ils ne supportent pas les protocoles de garantie de service sur IP (Internet Protocol), tel que le protocole de réservation de ressources « Reservation Protocol services » plus connu sous l'abréviation RSVP.

En ce qui concerne la réservation de ressources, les systèmes de radio actuels et connus du Demandeur à accès temporels multiples tel que le TDMA (abréviation anglo-saxonne de Time Division Multiple Access) ne peuvent garantir à la fois un débit minimal et une latence maximale de bout en bout.

Un procédé récent décrit dans la demande de brevet FR 06 11279 déposée par le Demandeur et intitulée « Procédé de réservation et d'allocation dynamique de créneaux temporels dans un réseau avec garantie de service » permet d'appliquer le protocole RSVP à un réseau TDMA avec les restrictions d'implémentation suivantes : des paquets de contrôle d'accès au média MAC (Médium Access Control) de taille fixe pour les sessions et une réservation adaptée aux applications à contraintes de latence prépondérante vis-à-vis des contraintes de débit. En effet, ce procédé ne permet pas d'optimiser la consommation de ressources et s'avère peu économe, tout particulièrement pour les applications à contraintes de débit prépondérantes.

L'invention concerne un procédé de niveau contrôle d'accès au milieu MAC permettant l'allocation dynamique des créneaux temporels de ressources radio, plus connu sous l'acronyme anglo-saxon slot, avec des paquets de session ou paquets réservés pour une session dans une application, ayant une taille variable et une garantie de service, utilisables aussi bien dans des applications demandant le respect de contrainte de latence prépondérante et/ou de contrainte de débit prépondérante. Deux types de trafic sont distingués : le trafic élastique et le trafic de session. Le trafic de session correspond, par exemple, à des flux multimédias continus (voix et vidéo) et des flux de données temps-réel pour lesquels une garantie de service forte (débit et latence) est souhaitée. Le trafic élastique correspond, par exemple, à un échange de fichier.

La présente invention s'appuie notamment sur l'invention décrite dans la demande de brevet FR 06 11279 précitée qui permet de réaliser des allocations dynamiques de slots de session de manière locale, c'est-à-dire sans recours à une gestion centralisée en fonctionnement normal. Le procédé décrit dans cet art antérieur repose, sur une attribution explicite des « slots » de sessions à un ou plusieurs noeuds et sur une notion de réservation de ces « slots ».

Un « slot » attribué à un noeud peut être librement réservé par ce noeud pour satisfaire une requête de réservation de ressource. Vu d'un noeud donné, l'ensemble des « slots » de session non réservés, forme un groupe ou pool de ressources dans lequel le noeud peut potentiellement puiser.

Dans le cas d'une application à contrainte de latence prépondérante, le procédé décrit dans la demande de brevet FR 06 11279 permet de décliner une réservation globale de bout en bout à garantie de latence, de type RSVP en mode gestion de latence plus connu sous l'abréviation anglo-saxonne OPWA pour « One Pass With Advertising », au niveau de la couche MAC lorsqu'un slot est composé d'un nombre NPS de paquets MAC de taille fixe.

Dans ce cas les paramètres C et D du message Adspec ont pour valeur :

$$C = BR.Ts / NPS = \text{taille d'un paquet MAC}$$

D = temps de transmission additionnel Avec les paramètres MAC suivants (en partie précédemment définis) :

BR : débit du canal TDMA,
N : nombre de noeuds du réseau,
K : nombre de slots physiques pour un noeud,
NPS : nombre de paquets MAC par slot physique,
H : nombre de slots physiques empruntés par le noeud considéré,
Ts : durée d'un slot physique,
m : nombre de paquets MAC réservés.

La requête RSVP est alors déclinée à la couche MAC de la façon suivante :

- Délai de transmission maximal requis : $\tau = C/R$
- Débit minimal requis : $R = r$.

Le document de Wu et al, intitulé « QoS multicast routing by using multiple paths/trees in wireless ad hoc networks », AD HOC NETWORKS, ELSEVIER, vol.5, n°5, 23 mars 2007, pages 600-612, XP005934474 divulgue un procédé utilisant des chemins multiples et des arbres multiples pour assurer la largeur de bande nécessaire lors d'un appel en tenant compte d'un nombre maximum de bonds.

La présente invention, utilise une nouvelle approche qui comporte une réservation des paquets de session de taille variable, la taille d'un paquet de session étant définie notamment par la taille maximum d'un paquet de l'application, augmentée des données d'encapsulation de niveau MAC tel que l'en-tête, ainsi que la gestion explicite de délai d'accès radio au niveau du protocole de réservation.

L'objet de l'invention concerne un procédé de réservation de ressources respectant les contraintes de débit et/ou de latence bout en bout avec garantie de service en débit minimum Dmin et en temps d'accès maximum Amax au niveau de N noeud d'un réseau radio utilisant des créneaux temporels ou slots Di, chaque créneau temporel étant associé à un débit élémentaire Deli pour émettre et transmettre des données, chaque noeud du réseau comprenant une couche de transport et une couche d'accès au réseau MAC, ledit procédé comprenant au moins les étapes suivantes :

- Envoyer par une couche de transport d'un noeud du réseau radio, une requête de réservation à la couche MAC dudit noeud;
- Emettre à partir d'un noeud source une requête de réservation de ressources selon un format de messages Path et Resv d'un protocole de réservation RSVP, comprenant :

  - un champ Ts correspondant à une durée maximale d'un créneau temporel observé sur un chemin courant dans une requête de réservation Adspec du message Path, transmise à partir du noeud source (1), la requête de réservation de ressource indiquant une largeur de bande maximale pour le chemin courant,
  - un champ n sur un nombre de noeud radio traversés dans un objet du message Path, et
  - un champ $\tau$ de délai maximum d'attente d'un créneau temporel dans un objet Rspec du message Resv correspondant à une réponse à la requête de réservation émise par le destinataire vers le noeud source, l'objet Rspec indiquant une largeur de bande à réserver pour un flux de données,
  - réserver par la couche MAC dudit noeud un nombre de créneaux temporels Di nécessaires pour satisfaire une garantie de service inscrite dans la requête de réservation, chaque créneau Di étant caractérisé par un débit élémentaire Deli.

D'autres caractéristiques et avantages de la présente invention apparaîtront mieux à la lecture de la description qui suit d'un exemple donné à titre illustratif et nullement limitatif annexé des figures qui représentent :

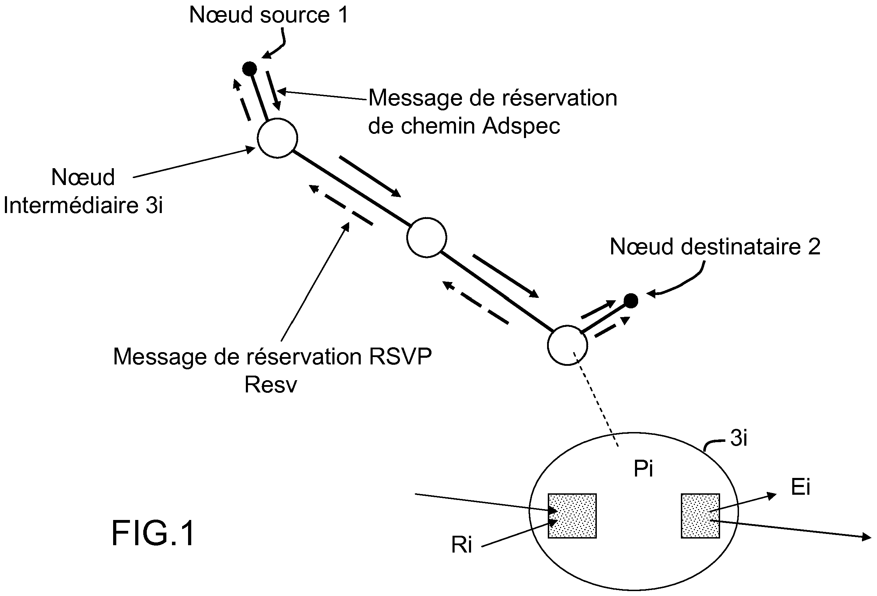

- La figure 1, le principe de la réservation de ressources,
- Les figures 2A et 2B, un format de trame et un créneau temporel dans le cas d'une application monosource TDMA, et
- La figure 3, les échanges entre les couches IP et MAC TDMA, pour l'exemple donné.

Afin de mieux faire comprendre le principe mis en oeuvre dans le procédé selon l'invention, la description est donnée à titre illustratif et nullement limitatif, pour un réseau radio ad hoc TDMA dans lequel tous les noeuds sont autonomes et peuvent jouer un même rôle. Un noeud 1 jouera le rôle de la source à un instant donné, un deuxième noeud 2, le destinataire du message ou des données et plusieurs noeud intermédiaires 3i. Pour cela, tous les noeud (noeud source et noeud destinataires) sont équipés chacun d'un processeur Pi adapté à mettre en oeuvre les étapes du procédé selon l'invention. Ils sont aussi pourvus de moyens radio, émetteur et récepteur Ei, Ri, permettant de transmettre les messages vers d'autres noeud et de recevoir des messages en provenance de ces autres noeud, le noeud destinataire a des moyens pour recevoir cette requête et émettre à son tour un message de réservation de chemin, les noeud utilisant des créneaux temporels pour émettre et transmettre des données. Un noeud intermédiaire comprend une couche MAC et une couche de transport et des moyens permettant la mise en oeuvre du procédé selon l'invention. Ces équipements sont connus de l'Homme du métier et ne seront pas détaillés. Quelques rappels sont donnés pour les terminologies utilisées et le contexte de l'invention en préambule à l'exposé du procédé et du système selon l'invention.

### Terminologie

L'architecture d'une trame radio est composée de 4 éléments en couche dans lesquels vont être véhiculées les données utiles, une unité de données utiles pouvant être un paquet de l'application, par exemple un paquet IP :

- Ressource MAC élémentaire : paquet MAC (paquet d'encapsulation au niveau MAC d'un paquet d'application),
- Créneau temporel : plus connu sous le terme ango-saxon « slot »,
- Trame de base : BF,
- Trame : F

Ces différents éléments sont détaillés ci-après.

### Paquet MAC

Le paquet MAC est une structure de donnée élémentaire au niveau MAC. Il est de taille variable. Pour une session donnée, sa taille est fixée et est déterminée par la taille maximum d'un paquet de l'application.

### Créneau temporel « slot », trame de base et trame

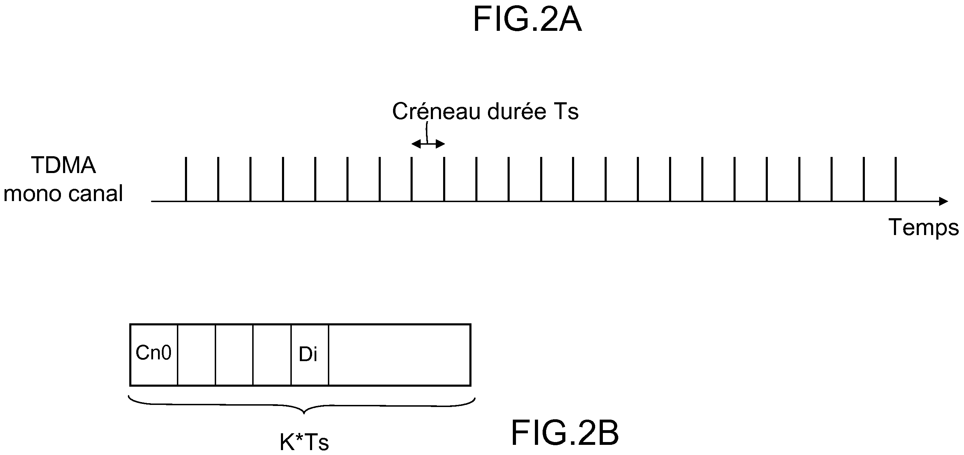

La trame de base et les « slots » sont illustrés sur les figures 2A et 2B

Cn : slot de contrôle pour le noeud n
Di : slot de la trame de base (autre que le slot de contrôle)
Ts : durée du slot
K : nombre de slots composant la trame de base
$T_{BF}$ : durée de la trame de base avec $T_{BF}=K*Ts$

Chaque trame de base contient K slots. Le premier slot $Cn_0$ dans chaque trame de base est appelé « slot de contrôle » C'est un « slot fixe »alloué de façon permanente au noeud n.
Les slots, peuvent être divisés en trois classes :

◦ Les slots de contrôle Cni utilisés pour transmettre la signalisation de niveau MAC (paquets de signalisation nécessaires au fonctionnement des services du niveau MAC tels que la découverte de voisins et la synchronisation trame). Ces services et leur mise en oeuvre sont connus de l'Homme du métier et ne seront pas redétaillés.
◦ Les slots « élastiques » utilisés pour transmettre les données élastiques : en général un sous-ensemble K de Di slots (où i = 1...K-1) sont alloués statistiquement à des noeud, afin de transmettre des données élastiques. Ainsi, Dij, (où j= 1...P) slots sont réservés pour la transmission de données élastiques (chaque noeud disposant ainsi de P slots régulièrement répartis dans la trame). Là aussi, le terme « élastique » est un terme usuellement connu par un Homme du métier et désigne sans ambiguïté des données.
◦ Les slots de « session » utilisés pour transmettre des paquets de session. Ces slots peuvent supporter des données élastiques. Ils sont réservés pour une session donnée.

Si l'on décompte le slot de contrôle Cni et les slots élastiques Dij, les N.(K-1-P) slots restants dans la trame globale constituent des slots de session qui sont allouables dynamiquement de façon à transmettre les paquets de session. Les slots de session non attribués sont regroupés dans un ensemble ou pool et sont partagés entre tous les noeuds du réseau. C'est-à-dire que tout noeud ayant besoin de satisfaire à une qualité de service requise peut utiliser un ou plusieurs slots de l'ensemble ou pool.

Un slot « Di »(où i = 1....K-1) de la trame globale peut être attribué de façon permanente à un noeud (slot élastique), de façon provisoire (slot de session alloué à un noeud ou à plusieurs noeud en cas de réutilisation spatiale), ou faire partie du pool des slots de session disponibles.

Il y a autant de trames de base que de noeud dans le réseau. La trame F est composée de l'ensemble des trames de base. Si le réseau est formé de N noeud, la structure de trame F est composée de N trames de base BF. La durée $T_F$ de la trame a pour valeur $T_F = N*T_{BF} = N*K*Ts$.

## Requête de réservation de ressource et allocation des slots de session

Le « pool » des slots de sessions est composé au maximum de N*(K-1-P) slots. Chaque noeud peut potentiellement utiliser tout slot de session du pool, alors que le slot de contrôle et les slots élastiques sont définitivement alloués à un noeud.

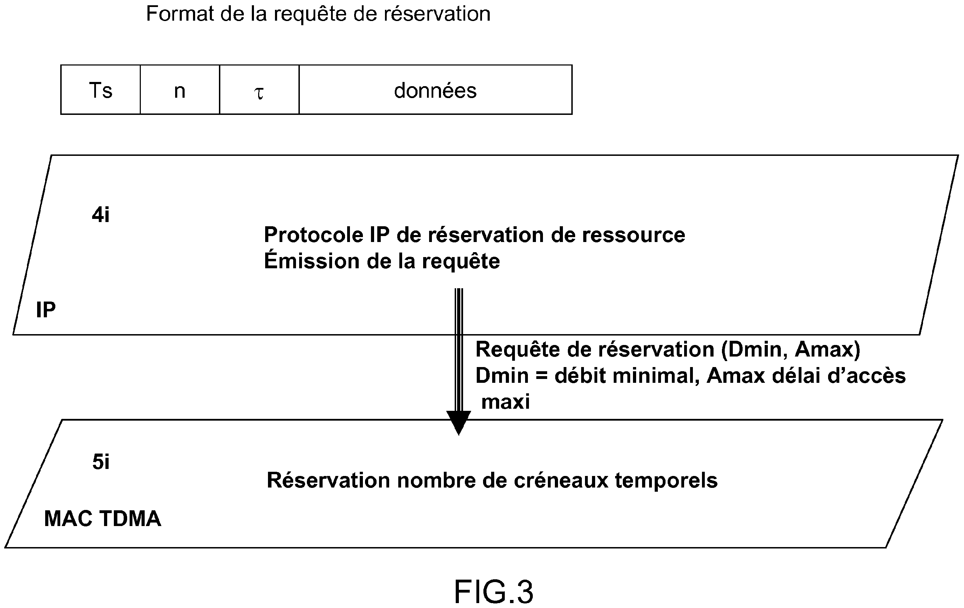

En présence d'une nouvelle session, la couche MAC 5i d'un noeud 3i (figure 3) reçoit une requête Res(Dmin, Amax) de réservation de ressource (flèche en pointillé sur la figure) assortie d'une contrainte de débit minimal Dmin et d'une contrainte de délai d'accès au slot Di maximal Amax. La requête de réservation de ressource est émise à partir de la couche protocolaire, dans l'exemple, le protocole IP (figure 3).

Chaque slot Di est caractérisé par un débit élémentaire associé Deli. Un noeud Ni peut ainsi évaluer le nombre de slots Di dont il a besoin pour satisfaire la requête de réservation en terme de débit Dmin en se basant sur le débit élémentaire Deli offert par un slot Di.

C'est la couche d'accès au milieu MAC qui réalise l'allocation effective des ressources correspondant à une requête de réservation de ressource pour une session. Pour un noeud donné, cette couche MAC choisit les slots de sessions Di de la trame F nécessaires pour satisfaire la requête de réservation de ressource et ensuite, la couche MAC démarre des procédures propres de négociation pour réserver les slots appartenant au pool. La couche MAC démarre ses procédures selon un principe divulgué dans la demande de brevet du Demandeur FR 06 11279. Elle réserve ensuite dans les slots alloués, l'espace nécessaire aux paquets MAC, c'est-à-dire que le procédé réserve un espace correspondant à un nombre de paquets MAC, un slot pouvant supporter plusieurs paquets MAC. La taille d'un paquet MAC est déterminée par la taille maximale d'un paquet de l'application supportée par la session, la session étant ouverte au profit d'une application. La taille maximale est précisée dans l'objet Tspec du message Path.

Plusieurs contraintes sont prises en compte au niveau de l'algorithme d'allocation des slots et des paquets MAC :

◦ Les ressources allouées doivent être compatibles avec les exigences de débit minimal Dmin spécifiées dans la requête de réservation,
◦ Le délai d'accès maximal au slot Amax doit être compatible avec le délai maximum imposé dans la requête de réservation.

## Déclinaison d'une réservation de ressource globale, de type RSVP, au niveau de la couche MAC

De façon à supporter la requête de réservation de ressource au niveau MAC, deux paramètres sont introduits dans la requête MAC :

- $\tau$ : le délai maximum requis pour accéder à un slot,
- R : le débit minimal requis.

Ces deux paramètres sont utilisés dans l'algorithme d'allocation de ressources, de façon à garantir le respect de la requête de réservation avec garantie de service.

Dans le cas d'un TDMA périodique au niveau de chaque noeud, le message Resv pour la requête de ressource RSVP se traduit dans la couche MAC par une réservation en termes de nombre de paquets MAC. Les paramètres RSVP sont décrits selon les spécifications RFC de l'IETF connues de l'Homme du métier et ne seront donc pas explicitées dans la présente demande de brevet.

Par exemple, les paramètres utilisés pour décrire l'enveloppe du trafic selon le modèle de sceau à jeton sont, selon la recommandation « token bucket » RFC 2212 disponible sur le lien internet http://www.faqs.org/rfcs/rfc2212.html.

- p = débit crête (« peak rate ») (octets/sec)
- b = capacité du baquet (« bucket depth ») (octets)
- r = débit du sceau à jeton (« token bucket rate ») (octets/sec)
- m = granularité minimum (« minimum policed unit ») (octets)
- M = taille maximum des paquets de donnée de l'application (« maximum datagram size ») (octets).

Les délais de transmission pour chaque noeud Ni sont décrits par les deux paramètres suivants :

- $C_i$ = facteur dépendant du débit (« rate dépendent factor ») (octets)
- $D_i$ = terme indépendant du débit (« rate independent term ») (sec)

Ainsi, la borne du délai de transmission d'un paquet à un débit minimal R pour le noeud Ni est :

$$\tau_i = C_i/R + D_i$$

Dans le cas d'un protocole TDMA avec des slots totalement périodiques au niveau de chaque noeud le procédé de calcul de RSVP peut être utilisé en établissant une correspondance rigoureuse entre les paramètres MAC et les paramètres RSVP.

Les relations mathématiques entre les paramètres Ci et $D_i$ du champ correspondant au message du chemin que vont emprunter les données pour le protocole RSVP AdSpec (du message PATH du protocole RSVP) et des paramètres du niveau MAC décrits précédemment sont alors les suivantes :

- $C_i$ : taille d'un paquet MAC (en octets)
- $D_i$ : délai additionnel éventuel lié à la gestion des slots ou au traitement et au transit interne d'un paquet MAC.

Pour des noeuds identiques, les paramètres sont indépendants du noeud et n'ont plus besoin d'être indicés.

Notons que la relation pour le paramètre Ci ou C n'est rigoureusement valide que si l'allocation conduit à une répartition temporelle sensiblement uniforme des slots physiques de chaque noeud à l'intérieur de la trame globale et si les paquets MAC d'une même session sont répartis sur des slots physiques distincts.

Le procédé considère des paquets MAC de taille variable. Pour une session donnée, toujours à contrainte de latence prépondérante, la taille des paquets MAC réservés sera fixée à la valeur M de la taille maximale des paquets de l'application supportée.

Dans ce cas, lorsque les slots sont décodés de façon globale, les paramètres du message de réservation de ressource « Adspec » C et D correspondant aux paramètres respectifs taille d'un paquet et délai additionnel éventuel lié à la gestion des slots ou au traitement et au transit interne d'un paquet MAC ont alors pour valeur :

C = M taille maximale des paquets

$$D = Ts + Do$$

Avec Do temps de transmission additionnel éventuel.

Le débit consommé au niveau MAC pour l'encapsulation des paquets n'a pas été pris en compte dans un souci de simplification. La prise en compte de cette encapsulation revient à considérer R comme le débit utile pour l'application.

En considérant maintenant le cas général d'une session à double contrainte de latence et de débit, sans supposer que la contrainte de latence est prépondérante. La déclinaison de « RSVP OPWA », basée sur une équivalence entre latence et débit, devient inadaptée pour les applications à contrainte de débit prépondérante, pour lesquelles elle introduit des contraintes excessives de délai d'accès maximal au slot.

En effet, par exemple, une requête RSVP à contrainte de latence inexistante devrait être déclinée à la couche MAC de la façon suivante :

- Délai de transmission maximal requis : $\tau$ = infini
- Débit minimal requis : R = r

Pour traiter convenablement la réservation de ressource à garantie de débit et de latence pour des applications pour lesquelles la contrainte prépondérante n'est, a priori, pas connue, ni en l'occurrence si la contrainte de latence est faible, le procédé doit pouvoir gérer séparément les caractéristiques de latence et de débit. Il est alors possible de considérer une extension du mode OPWA du protocole RSVP en ajoutant les champs suivants :

- un champs Ts correspondant à la durée slot dans l'objet AdSpec du message de réservation de ressources,
- un champ n sur le nombre de noeud radio traversés dans l'objet AdSpec du message de réservation de ressources,
- un champ $\tau$ de délai maximum d'attente du slot dans l'objet Rspec du message de réponse au message de réservation de ressources Resv.

Considérant la latence maximale de bout en bout $\delta$, et le délai maximum d'attente $\tau$ du slot au niveau de chaque noeud, les relations mathématiques suivantes sont établies :

Dans le cas où le débit garanti est inférieur au débit crête R $\leq$ p :

$$\delta = \frac{(b-M)(p-R)}{R(p-r)} + \frac{M}{R} + \sum_{i=1}^{n'} D_i + n.\tau$$

où n' est le nombre total de noeuds du chemin, éventuellement supérieur au nombre n de noeuds radio du chemin donné précédemment.

Dans le cas où le débit garanti R est supérieur au débit crête p, R $\geq$ p :

$$\delta = \frac{M}{R} + \sum_{i=1}^{n'} D_i + n.\tau$$

Le délai d'accès maximum au slot a pour valeur :

$$\tau = m.Ts$$

m entier non nul et Ts la durée d'un slot

Le problème d'optimisation de la réservation s'écrit alors :

Max m
Min R

Où la maximisation de m est considérée prioritairement à la minimisation du débit R sous les contraintes suivantes :

Où Rmax est le débit maximum admissible et $\delta$max la contrainte de latence maximum de bout en bout.

La solution pour l'optimum (R, m') s'écrit :

si Rmax $\leq$ p :

$$m' = \min\left(\left\lfloor \frac{\delta_{max} - \sum_{i=1}^{n'} D_i - \frac{M}{R_{max}} - \frac{(b-M)(p-R_{max})}{R_{max}(p-r)}}{n.T_s} \right\rfloor, N.K\right)$$

$$R' = \max\left(r, \frac{\left(\frac{b-M}{p-r}\right)p + M}{\delta_{max} - \sum_{i=1}^{n} D_i - n.m'.T_s + \frac{b-M}{p-r}}\right)$$

si Rmax $\geq$ p :

$$m' = \min\left(\left\lfloor \frac{\delta_{\max} - \sum_{i=1}^{n} D_i - \frac{M}{R_{\max}}}{n.T_s} \right\rfloor, N.K\right)$$

$$R' = \max\left(r, \frac{M}{\delta_{\max} - \sum_{i=1}^{n} D_i - n.m'.T_s}\right)$$

La requête de réservation RSVP est alors déclinée à la couche MAC de la façon suivante :

- Délai de transmission maximal requis : $\tau' = m'.T_s$ avec m' le nombre de paquets réservés,
- Débit minimal requis : R'

Le procédé selon l'invention offre notamment les avantages suivants :

- Optimiser l'allocation des ressources pour les sessions en réservant des paquets de données de session de taille adaptée,
- Garantir une qualité de service au niveau noeud sur les flux de session en terme de débit, de délai de transmission et de gigue,
- Permet de mettre en place des garanties de service applicatif au niveau des couches supérieures, en termes de débit minimal et de valeur de latence maximum pour l'application bout en bout. Ces garanties peuvent s'appliquer à des applications à contrainte de latence prépondérante mais également à des applications à contrainte de débit prépondérante. Ceci est alors réalisé en mettant en oeuvre un mécanisme global de réservation dérivé du protocole standard RSVP, en enrichissant le mode « OPWA ».

## Revendications

1. Procédé de réservation de ressources respectant les contraintes de débit et/ou de latence bout en bout avec garantie de service en débit minimum Dmin et en temps d'accès maximum Amax au niveau des N noeuds d'un réseau radio utilisant des créneaux temporels Di, un créneau temporel étant associé à un débit élémentaire Deli pour émettre et transmettre des données, chaque noeud du réseau comprenant une couche de transport (4i) et une couche accès au réseau MAC, ledit procédé comprenant au moins les étapes suivantes :

   • Envoyer par une couche de transport d'un noeud du réseau radio, une requête de réservation à la couche MAC dudit noeud (3i);
   • Emettre à partir d'un noeud source (1) une requête de réservation de ressources selon un format de messages Path et Resv d'un protocole de réservation RSVP, comprenant :

      - un champ Ts correspondant à une durée maximale d'un créneau temporel observé sur un chemin courant dans une requête de réservation Adspec du message Path, transmise à partir du noeud source (1), la requête de réservation de ressource indiquant une largeur de bande maximale pour le chemin courant,
      - un champ n sur un nombre de noeud radio traversés dans un objet du message Path, et
      - un champ $\tau$ de délai maximum d'attente d'un créneau temporel dans un objet Rspec du message Resv correspondant à une réponse à la requête de réservation émise par le destinataire vers le noeud source (1), l'objet Rspec indiquant une largeur de bande à réserver pour un flux de données,

   • Réserver par la couche MAC (5i) dudit noeud (3i) un nombre de créneaux temporels Di nécessaires pour satisfaire une garantie de service inscrite dans la requête de réservation, chaque créneau Di étant **caractérisé par** un débit élémentaire Deli.

2. Procédé de réservation selon la revendication 1, **caractérisé en ce qu'**il met en oeuvre une méthode d'allocation dynamique de créneaux temporels pour les sessions, puis une réservation des paquets MAC pour les sessions sur les temporels $D_i$ réservés en adaptant dynamiquement la taille des paquets MAC au besoin de l'application.

3. Procédé selon la revendication 1, **caractérisé en ce que** la requête de réservation RSVP est déclinée à la couche MAC de la façon suivante :

- Délai de transmission maximal requis : $\tau' = m'.Ts$
- Débit minimal requis : R'

où Ts correspond à la durée d'un slot et m' le nombre de paquets réservés.

4. Procédé selon l'une des revendications 1 à 3, **caractérisé en ce que** le réseau est un réseau radio ad hoc, une trame radio étant composée de quatre éléments en couche : une ressource MAC élémentaire, un créneau temporel ou « slot », une trame de base BF, une trame F, une trame comprenant un slot de contrôle alloué à un noeud donné transmettant la signalisation de niveau MAC, plusieurs créneaux temporels destinés à transmettre des données élastiques ou des paquets de session.

5. Procédé selon l'une des revendications 1 à 4, **caractérisé en ce qu'**il utilise un mode d'accès multiple à répartition dans le temps ou TDMA périodique au niveau de chaque noeud.

6. Procédé selon l'une des revendications 1 à 5, **caractérisé en ce qu'**il utilise un protocole IP.

7. Utilisation du procédé selon la revendication 1 pour une réservation globale de bout en bout à garantie de latence, de type RSVP en mode gestion de latence ou OPWA.

8. Réseau configuré pour offrir une réservation de ressources pour des contraintes de débit et de latence bout-à-bout constitué de plusieurs noeuds, un noeud source (1), un noeud destinataire (2) et un ou plusieurs noeud intermédiaires (3i), le noeud source comprenant des moyens d'émission d'une requête de réservation de service, Ei, pour émettre une requête en réservation de ressources, le noeud destinataire comprenant des moyens pour recevoir cette requête et émettre à son tour un message de réservation de chemin, les noeud utilisant des créneaux temporels pour émettre et transmettre des données, **caractérisé en ce que** chaque noeud intermédiaire comprend une couche MAC et une couche de transport et des moyens permettant la mise en oeuvre du procédé selon l'une des revendications 1 à 7.

9. Réseau selon la revendication 8, **caractérisé en ce que** le réseau est un réseau ad hoc.

**Patentansprüche**

1. Verfahren zur Ressourcenreservierung, das die Einschränkungen des Durchsatzes und/oder der Latenz von Anfang bis Ende mit Dienstgarantie im Minimumdurchsatz Dmin und in der maximalen Zugriffszeit Amax bei N Knoten eines Funknetzes beachtet, das Zeitschlitze Di verwendet, wobei ein Zeitschlitz einem elementaren Durchsatz Deli zugeordnet ist, um Daten auszugeben und zu übertragen, wobei jeder Knoten des Netzes eine Transportschicht (4i) und eine MAC-Netzwerkzugriffsschicht umfasst, wobei das Verfahren mindestens die folgenden Schritte umfasst:

• Aussenden einer Reservierungsanfrage an die MAC-Schicht des Knotens (3i) durch eine Transportschicht eines Funknetzknotens;
• Ausgeben einer Reservierungsanfrage für Ressourcen von einem Quellknoten (1) gemäß einem Nachrichtenformat Path und Resv eines Reservierungsprotokolls RSVP, umfassend:

- ein Feld Ts, das einer Maximaldauer eines auf einem aktuellen Pfad in einer Reservierungsanfrage Adspec der Nachricht Path beobachteten Zeitschlitzes entspricht, weitergeleitet von dem Quellknoten (1), wobei die Reservierungsanfrage für Ressourcen eine maximale Bandbreite für den aktuellen Pfad angibt,
- ein Feld n über einer Anzahl von durchlaufenen Funkknoten in einem Objekt der Nachricht Path, und
- ein Feld $\tau$ einer Höchstwartezeit eines Zeitschlitzes in einem Objekt Rspec der Nachricht Resv, die einer durch den Empfänger an den Quellknoten (1) ausgegebenen Antwort auf die Reservierungsanfrage entspricht, wobei das Objekt Rspec eine für einen Datenfluss zu reservierende Bandbreite angibt,

• Reservieren, durch die MAC-Schicht (5i) des Knotens (3i), einer Anzahl von Zeitschlitzen Di, die notwendig sind, um eine in der Reservierungsanfrage angemeldete Dienstgarantie zu erfüllen, wobei jeder Zeitschlitz Di durch einen elementaren Durchsatz Deli charakterisiert ist.

2. Verfahren zur Reservierung nach Anspruch 1, **dadurch gekennzeichnet, dass** es ein Verfahren dynamischer Zuweisung von Zeitschlitzen für die Sitzungen anwendet, danach eine Reservierung der MAC-Pakete für die Sitzungen über die reservierten Zeitschlitze $D_i$, indem die Größe der MAC-Pakete dem Bedarf der Anwendung gemäß dynamisch angepasst wird.

3. Verfahren nach Anspruch 1, **dadurch gekennzeichnet, dass** die Reservierungsanfrage RSVP folgerndermaßen auf der MAC-Schicht abgewandelt wird:

- maximal erforderliche Übertragungszeit: $\tau' = m'.Ts$
- minimal erforderlicher Durchsatz: R'

wobei Ts der Dauer eines Schlitzes und m' der Anzahl der reservierten Pakete entspricht.

4. Verfahren nach einem der Ansprüche 1 bis 3, **dadurch gekennzeichnet, dass** das Netz ein Ad-hoc-Funknetz ist, wobei ein Funkrahmen aus vier Schichtelementen gebildet wird: einer elementaren MAC-Ressource, einem Zeitschlitz oder "Schlitz", einem Grundrahmen BF, einem Rahmen F, einem Rahmen, der einen einem gegebenen Knoten zugewiesenen Prüfschlitz umfasst, der die Meldung der MAC-Stufe überträgt, mehreren Zeitschlitzen, die dazu bestimmt sind, weitgefasste Daten oder Sitzungspakete zu übertragen.

5. Verfahren nach einem der Ansprüche 1 bis 4, **dadurch gekennzeichnet, dass** es einen periodischen Zeitmultiplex-Mehrfachzugriffsmodus bzw. TDMA-Modus an jedem Knoten nutzt.

6. Verfahren nach einem der Ansprüche 1 bis 5, **dadurch gekennzeichnet, dass** es ein IP-Protokoll nutzt.

7. Benutzung des Verfahrens nach Anspruch 1 für eine globale Reservierung von Anfang bis Ende mit Latenzgarantie vom Typ RSVP im Latenzverwaltungsmodus oder OPWA.

8. Netz, das konfiguriert ist, um eine Ressourcenreservierung für Einschränkungen des Durchsatzes und der Latenz von Anfang bis Ende anzubieten, das aus mehreren Knoten, einem Quellknoten (1), einem Empfängerknoten (2) und einem oder mehreren Zwischenknoten (3i) besteht, wobei der Quellknoten Sendemittel für eine Dienstreservierungsanfrage, Ei, umfasst, um eine Ressourcenreservierungsanfrage auszugeben, wobei der Empfängerknoten Mittel umfasst, um diese Anfrage zu empfangen und seinerseits eine Pfadreservierungsnachricht auszugeben, wobei die Knoten Zeitschlitze verwenden, um Daten auszugeben und zu übertragen, **dadurch gekennzeichnet, dass** jeder Zwischenknoten eine MAC-Schicht und eine Transportschicht und Mittel umfasst, die die Ausführung des Verfahrens nach einem der Ansprüche 1 bis 7 erlauben.

9. Netz nach Anspruch 8, **dadurch gekennzeichnet, dass** das Netz ein Ad-hoc-Netz ist.

**Claims**

1. A resource reservation method respecting end-to-end bit rate and/or latency constraints with guaranteed service in terms of minimum bit rate Dmin and maximum access time Amax at N nodes of a radio network using time slots Di, a time slot being associated with a basic bit rate Deli for sending and transmitting data, each node of the network comprising a transport layer (4i) and a MAC network access layer, said method comprising at least the following steps:

• sending, by a transport layer of a node of the radio network, a reservation request to the MAC layer of said node (3i);
• sending, from a source node (1), a resource reservation request in a format of Path and Resv messages of a RSVP reservation protocol, comprising:

- a field Ts corresponding to a maximum duration of a time slot observed on a current path in the Adspec reservation request of the Path message, transmitted from the source node (1), the resource reservation request indicating a maximum bandwidth for the current path;

- a field n over a number of radio nodes crossed in an object of the Path message, and
- a fields of a maximum waiting time for a time slot in a Rspec object of the Resv message corresponding to a response to the reservation request sent by the recipient to the source node (1), the Rspec object indicating a bandwidth to be reserved for a data stream;

• Reservieren, durch die MAC-Schicht (5i) des Knotens (3i), einer Anzahl von Zeitschlitzen Di, die notwendig sind, um eine in der Reservierungsanfrage angemeldete Dienstgarantie zu erfüllen, wobei jeder Zeitschlitz Di durch einen elementaren Durchsatz Deli charakterisiert ist.reserving, by the MAC layer (5i) of said node (3i), a number of time slots Di needed to satisfy a service guarantee recorded in the reservation request, each slot Di being **characterised by** a basic bit rate Deli.

2. The reservation method as claimed in claim 1, **characterised in that** it implements a dynamic time slot allocation method for the sessions, then a reservation of the MAC packets for the sessions on the reserved time slots $D_i$ by dynamically adapting the size of the MAC packets to the need of the application.

3. The method as claimed in claim 1, **characterised in that** the RSVP reservation request is declined at the MAC layer as follows:

- maximum transmission delay required: $\tau' = m'.Ts$
- minimum bit rate required: R'

in which Ts corresponds to the duration of a slot and m' to the number of packets reserved.

4. The method as claimed in any one of claims 1 to 3, **characterised in that** the network is an ad hoc radio network, a radio frame consisting of four layered elements: a basic MAC resource, a time slot or 'slot', a basic frame BF, a frame F, a frame comprising a control slot allocated to a given node transmitting the MAC level signalling, several time slots intended for transmitting elastic data or session packets.

5. The method as claimed in any one of claims 1 to 4, **characterised in that** it uses a periodic multiple access mode with time division or TDMA at each node.

6. The method as claimed in any one of claims 1 to 5, **characterised in that** it uses an IP protocol.

7. The use of the method as claimed in claim 1 for an overall reservation from end to end with guaranteed latency, of RSVP type in latency management mode or OPWA.

8. A network configured to provide a resource reservation for end-to-end bit rate and latency constraints, consisting of several nodes, a source node (1), a recipient node (2) and one or more intermediate nodes (3i), the source node comprising resource reservation request sending means Ei, for sending a resource reservation request, the recipient node having means for receiving this request and sending in turn a path reservation message, the nodes using time slots to send and transmit data, **characterised in that** each intermediate node comprises a MAC layer and a transport layer and means for implementing the method as claimed in any one of claims 1 to 7.

9. The network as claimed in claim 8, **characterised in that** the network is an ad hoc network.

FIG.1

# FIG.2A

Créneau durée Ts

TDMA
mono canal

Temps

| Cn0 | | | | Di | |

K*Ts

# FIG.2B

EP 2 223 474 B1

Format de la requête de réservation

| Ts | n | $\tau$ | données |
|---|---|---|---|

**4i**

**Protocole IP de réservation de ressource**
**Émission de la requête**

**IP**

**Requête de réservation (Dmin, Amax)**
**Dmin = débit minimal, Amax délai d'accès**
**maxi**

**5i**

**Réservation nombre de créneaux temporels**

**MAC TDMA**

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 0611279

**Littérature non-brevet citée dans la description**

• QoS multicast routing by using multiple paths/trees in wireless ad hoc networks. **WU et al.** AD HOC NETWORKS. ELSEVIER, 23 Mars 2007, vol. 5, 600-612